# EUROPÄISCHE PATENTSCHRIFT

(11) **EP 2 411 196 B1**
(45) Veröffentlichungstag und Bekanntmachung des Hinweises auf die Patenterteilung: **23.01.2013**
(21) Anmeldenummer: 09775847.8
(22) Anmeldetag: 14.03.2009
(51) Int. Cl.: B29B 17/00, B29B 17/02, B29B 17/04, B29K 105/06

(54) **RECYCLING-VERFAHREN FÜR ELEKTRONIK-SCHROTT ZUR GEWINNUNG VON WIEDERVERWERTBAREN WERKSTOFFEN BEI VERMEIDUNG EINER FREISETZUNG VON SCHADSTOFFEN**
RECYCLING METHOD FOR ELECTRONICS SCRAP IN ORDER TO OBTAIN REUSABLE MATERIALS WHILE AVOIDING THE RELEASE OF HARMFUL SUBSTANCES
PROCÉDÉ DE RECYCLAGE POUR DÉCHETS ÉLECTRONIQUES DESTINÉ À RÉCUPÉRER DES MATIÈRES REVALORISABLES EN ÉVITANT DE LIBÉRER DES SUBSTANCES NOCIVES

(43) Veröffentlichungstag der Anmeldung: 01.02.2012
(73) Patentinhaber: KOSLOW, Alexander, 84036 Landshut (DE)
(72) Erfinder: KOSLOW, Alexander, 84036 Landshut (DE)
(86) Internationale Anmeldenummer: PCT/DE2009/000352
(87) Internationale Veröffentlichungsnummer: WO 2010/105583

(56) Entgegenhaltungen:
- EP-A2- 0 524 396
- WO-A1-00/54885
- DE-A1- 10 344 861
- DE-A1-102004 041 494
- DE-A1-102006 034 692

## Beschreibung

Bei der Aufbereitung von Elektronikschrott (E-Schrott), zu wiederverwertbaren Werkstoffen, sind, im Hinblick auf die Vielfältigkeit an Werkstoffen, aus denen sich dieser Schrott zusammensetzt, Einzelmaßnahmen vorzusehen, die verhindern, dass Schadstoffe, die im Elektronikschrott enthalten sein können, ebenso wenig in die Umwelt freigesetzt werden, wie auch solche Stoffe, die noch in geschlossenen E-Bauteilen enthalten sind und später durch deren physische oder thermische Zerstörung freigesetzt werden, z. B. E-Röhren, Kondensatoren u. ä..

Es sind bereits Verfahren bekannt bei denen E-Schrott zunächst tiefen Temperaturen ausgesetzt wird, um damit Plastikstoffe zu verspröden und um sie anschließend besser zerkleinern zu können. Im Anschluss daran werden Fe- und Ne- Materialien von Kunststoffen in üblicher Weise, z. B. mittels Magnet- oder Hochfrequenzsichtung oder händisch auszusondern (DE 196 00 647 A1). Nachteilig ist bei diesem Verfahren und der zugehörigen Vorrichtung, dass für die Zerkleinerung von E-Schrott Hammermühlen (15,16) eingesetzt werden, die den Schrott wahllos zertrümmern. Hierbei werden Kondensatoren, Quecksilberschalter u. ä. schadstoffbehaftete Bauelemente zerstört, sodass die Schadstoffe in die Umwelt emittieren können.

Ein ähnliches Verfahren ist in der Deutschen Auslegeschrift DE 10 2004 041 494 A1 beschrieben. Verbundstoffhaltige, vorbehandelte (nicht näher erläutert) und teilzerlegte Materialgemische werden in den Verfahrensprozess eingeführt. Hier erfolgt zunächst in einer groben Zerkleinerungsstufe (nicht näher bezeichnet) eine erste Zerstörung von Gehäuseteilen, an diese schließt eine Sortierstufe an bei der schadstoffbelastete Stoffkomponenten und sog. Störstoffen ausgesondert werden. Es folgen weiter Stufen zum Trennen von Fe- und NE-Metallen, sowie Stoffen, die wie Gewöllen und ähnlichem. Darauf folgen Stufen der Feinsortierung von Metallen und Kunstsatoffen. Auch bei diesem Verfahren ist das wesentliche Merkmal der vorliegenden Erfindung außer Acht gelassen. Um zu vermeiden, dass bereits bei der ersten Zerkleinerung des zu sortierenden Materialgemenges Schadstoffe in die Umwelt gelangen, kann man nicht jede x-beliebige Art für die erste Zerkleinerung der Gehäuse und Ummantelungen der evtl. schadstoffhaltigen Einzelkomponenten im zu sortierenden Gemenge gewählt werden. Nur eine bestimmte, durch die vorliegende Erfindung gekennzeichnete Einrichtung ist ausschließlich für diese Prozessstufe geeignet. Dies zu erkennen ist das Wesen dieser Erfindung.

Es sind weitere Verfahren bekannt, bei denen Metalle von Kunststoffen aus einem Gemenge unterschiedlicher Stoffe in einem Flotationsprozess voneinander getrennt werden. Bei diesem Verfahren geht es um die Entsorgung von Hausmüll, wobei hauptsächlich der energetische Gesichtspunkt berücksichtigt werden soll. Eine Aufbereitung von E-Schrott, geschweige denn die Absonderung von schadstoffhaltigen Materialkomponenten, ist in dieser Druckschrift jedoch nicht enthalten. Vielmehr geht es in erster Linie um die Trennung von brennbaren und nicht brennbaren Bestandteilen im Hausmüll (DE 10 2005 017 334 A1).

In einer weiteren Druckschrift wird zwar die sortenreine Gewinnung von Kunststoffen aus Abfällen als Ziel angegeben, indessen sind Mittel und Wege zur Erreichung dieses Zieles nicht aufgezeigt. Alleine der Hinweis, dass dies über eine Nassseparation oder durch Hitze erfolgen soll, stellt keine nachvollziehbare Lehre für den Sachkundigen dar (DE 196 51 571 A1).

Ein weiteres Verfahren ist aus der DE 10 344 861 bekannt.

Es ist auch bekannt mittels Sensoren, UV und anderer Techniken Kunststoffe und Metalle nach ihrer artspezifischen Zusammensetzung zu erkennen, zu determinieren und zu trennen (DE 199 49 656 A1).

Es sind somit Einzel- und Gesamtmaßnahmen bekannt aus einem Stoffgemenge einzelne Stoffkomponenten auszusondern, um die so gewonnenen Werkstoffe einer ihrem Stoffcharakter entsprechenden Wiederverwertung zuzuführen. All diesen Maßnahmen ist jedoch ein wesentlicher Mangel zu eigen, der darin zu sehen ist, dass am Anfang oder innerhalb der Verfahrensstrecke eine Zerkleinerung der zu behandelnden Stoffe des Gemenges stattfindet, ohne dass Bauteile entfernt worden wären, die Schadstoff belastet sind. In all diesen bekannten Verfahren findet eine meist mechanische Zerkleinerung und damit Zerstörung der ursprünglichen Materialstrukturen statt, ehe schadstoffbelastete Bauteile entfernt worden sind, sodass die Freisetzung von Schadstoffen nicht unterbunden oder zumindest auf ein Mindestmass reduziert würde. Solche Verfahren entsprechen damit nicht mehr den heute geltenden gesetzlichen Bestimmungen und sind daher nicht mehr zulässig.

Vielmehr darf eine Zerkleinerung, die zur Zerstörung von Bauteilen führt, die Schadstoffe beinhalten, nach der geltenden Gesetzeslage erst dann stattfinden darf, wenn aus dem Gesamtgemenge bei E-Schrott, solche Bauteile entfernt worden sind. Dieses Aussondern von bestimmten Bauteilen setzt voraus, dass eine Vorsortierung in einem geschlossenen Raum, händisch oder maschinell vorgenommen wird, sodass Bauteile wie Quecksilberschalter und ähnliche Schadstoffe beinhaltende Bauteile, ausgesondert werden können. Bei den bekannten Anlagen kann daher nur E-Schrott weiterverarbeitet werden, der vorher in einer anderen Anlage von schadstoffbelastetem Material befreit wurde. Händische Vorsortierung, ohne maschinelle Zerkleinerung von Gehäuseteilen, ist nicht nur ineffizient und zeitraubend, sondern erfordert auch hohen finanziellen Aufwand.

Aufgabe der Erfindung ist es ein Verfahren aufzuzeigen, das diese Nachteile nicht mehr aufweist und den geltenden gesetzlichen Vorschriften für die Wiederaufbereitung von E-Schrott entspricht.

Die Erfindung schlägt gegenüber dem Bekannten eine Verfahrensstrecke vor, bei der die Entsorgung von E-Schrott in einer Weise erfolgt, bei der die Freisetzung von Schadstoffen in die Atmosphäre weitestgehend unterbunden ist und bei der wiederverwertbare Stoffkomponenten derart vereinzelt werden, dass sie einer artgerechten, umweltfreundlichen und in einer Ressourcen schonenden Weise wiederaufbereitet werden und damit in einen Fabrikationsprozess als hochwertige Werkstoffe wieder eingeschleust werden können.

Es liegt auf der Hand, dass hierbei bekannte Verfahrensstufen mit neuen verbunden werden müssen.

Entscheidend für die Erfindung sind hierbei neben folgenden Verfahrensstufen die Zerstörung von Gehäusen in einer derart schonenden Weise, dass eine vorzeitige Beschädigung von schadstöffführenden Stoffanteilen vermieden wird.
1. nach einem ersten, groben händischen oder schonenden maschinellen Aussondern von schadstoffbelasteten oder -enthaltenden Komponenten in dem zu sondierenden Stoffgemenge innerhalb eines geschlossenen Raumes und Entfernen von Kabeln, um eine Bildung von Kabelknäueln zu vermeiden, folgt
2. ein Zerkleinern des verbleibenden Stoffgemenges ausschließlich mittels eines sog. "Smashers" (keinesfalls eines Shredders oder einer Hammermühle oder einer anderen quetschenden oder schneidenden Zerkleinerung) - unter "Smasher" ist hierbei eine rotierende Trommel großen Durchmessers zu verstehen, die beim Rotieren das zugeführte Material bis zum höchsten Punkt in der Trommel, mittels an der Trommelwandung befestigten oder getrennt rotierenden Mitnehmern, mitnimmt und die nach Erreichen des höchsten Punktes nach unten fallen, sodass das herabfallende Material durch den Aufprall zerbirst, ohne dass dabei Stoffteile gequetscht werden. Hierdurch werden evtl. noch mitgeführte Kondensatoren aus dem sie einschließenden Gehäuse gelöst, ohne dass eine Quetschung oder gar ein Zerschneiden stattfindet und dadurch im Innern eines Kondensators befindliches, schadstoffbelastendes Material freigesetzt würde.
3. Dieser Art freigesetztes Material wird getrennt nach schadstoffbefrachteten Bauteilen, die nach der ersten Sortierung noch im zu trennenden Stoffgemenge verblieben waren (Kondensatoren, LCD-Displayschirmen, etc.).
4. Hieran schließt ein Prozessabschnitt an bei dem große und voluminöse Kunststoffteilen ausgesondert werden,
5. Magnetsichtung nach Fe-Material und Aussondern mittels Elektromagneten,
6. Aussondern von sperrigen, großvolumigen Bauteilen (Alu, Cu, Edelmetallen und ähnlichen Werkstoffen oder Kunststoffen bestehen), um Zerkleinerungsmaschinen zu schonen und deren Standzeiten zu verbessern,
7. Zerkleinerung der verbleibenden Reststoffe, die aus Kunststoffen und anderen Materialien bestehen können; diese Zerkleinerung kann, da schadstoffbelastendes Material nun entfernt ist, mit allen Arten von schneidenden Zerkleinerungsgeräten, wie Shreddern, Hammermühlen, Ein- und Mehrwellenzerkleinerern, durchgeführt werden;
8. das weiter zerkleinerte Gemenge wird in ein, mit einem Wasserbad arbeitendes Flotationsverfahren, das mit einer, in seiner Intensität regelbaren Pulsationseinrichtung ausgestattet ist, verbracht; hier erfolgt eine erste Trennung von Kunststoffen und Materialien, die schwerer als Kunststoff sind;
9. In weiteren Flotationsstufen, die ebenfalls mit regelbaren Pulsationseinrichtungen ausgestatten sind, deren Pulsationsfrequenz auf die zu trennenden Kunststoffe genau abstimmbar ist, werden die aus der ersten Flotationsstufe gewonnenen Kunststoffe nach Kunststoffart getrennt und einer Identifikationsstrecke zugeführt;
10. Nach der Identifikations- und Determinationsstrecke werden die so gewonnenen artreinen Kunststoffe granuliert und verpackt und anschließend als wiedergewonnene Rohstoffe einer neuerlichen Verarbeitung zugeführt.
11. Parallel zu der Weiterbehandlung der Kunststoffe werden die Stoffe, die schwerer als Kunststoff sind, getrennt nach NE-Metallen und nicht weiter verwertbaren Stoffen, wie Steine, Holz u. ä. Materialien,
12. Die NE-Metalle werden in einer Hochfrequenz- oder anderen hierfür entwickelten Sichtanlage nach Stoffarten, wie Al, Ni, Cr, Ag, Au etc., getrennt und zur Rückführung in einen artgerechten Produktionsprozess vorbereitet.

Damit ist die Aufgabe dieser Erfindung in einem Gesamtkonzept gelöst, das auf einem Stoffgemenge von unterschiedlichen Stoffen aufbaut und bei dem am Ende einer Verfahrensstrecke alle in einem Stoffgemenge aus E-Schrott erhaltenen und wiederverwertbaren Einzelstoffe von einander separiert werden, um sie einer Stoffart spezifischer Verwendung zuzuführen. Jeder weiterer Sortiervorgang entfällt. Bei noch verbleibende Reststoffe handelt es sich nur noch um Stoffe, die für eine Halden- oder thermische Entsorgung in Frage kommen, da sie für jegliche Art der industriellen Wiederverwertung ausscheiden.

Bei der Erfindung handelt es sich somit um ein Verfahren, das von einem Aufbereitungssystem gebildet ist, das mehrere Einzelabschnitte aufweist, die nahtlos aneinander anschließen, wobei gegebenenfalls Rückkopplungsbereiche vorhanden sind, sodass vom Verfahrensablauf her, nicht nur ein Höchstmass an Wirtschaftlichkeit, sondern auch die Sortenreinhalt der wiedergewonnenen Werkstoffe, gewährleistet ist. Hiermit verbunden ist auch ein Mindestaufwand an Kosten für den Aufbau einer Einrichtung zur Durchführung des erfindungsgemäßen Verfahrens.

Entscheidend für die gesamte Verfahrensstrecke ist die erste maschinelle Aufbereitung des zu trennenden E-Schrotts in einem sog. Smasher, der an sich bereits bekannt ist, jedoch in seiner Funktionswichtigkeit für die Aufbereitung von E-Schrott bisher nicht erkannt wurde. Ein solcher Smasher kann aus einer rotierenden Trommel, die mindestens eine Smasherkammer umfasst bestehen, wobei an der rotierenden Trommelinnenwandung Mitnehmer, verteilt über die Innenwandfläche, befestigt sind. Die Trommel. Die vorzugsweise in zentrisch zur Trommel angeordneten Lagern an den beiden verschlossenen Stirnseiten der Trommel auf, mit einem Fundament verbundenen Lagerstühlen, drehbar gehalten ist, weist vorzugsweise einen regelbaren Antrieb auf. Mit der Regelung der Drehzahl der Trommel kann die Intensität der Zerstörung von Gemengeteilen beeinflusst werden. Es gibt auch Smasherbauarten bei denen das Trommelgehäuse feststehend angeordnet ist und im Innern der Trommel eine rotierende, die Mitnehmer tragende, am Umfang zur Innenwand des Trommelgehäuses hin offene Trägereinrichtung vorgesehen ist, deren Drehzahl vorzugsweise gleichfalls regelbar ist. Bei dieser Bauart von Smashern kann gegenüber dem Scheitelpunkt des Trommelgehäuses in einer Ausbuchtung des Trommelgehäuses aufschlagdämpfendes Material vorgesehen werden, sodass die Zerstörungsenergie des Aufschlags gedämpft und an die Notwendigkeit des aufzubrechenden Materials angepasst werden kann, damit eine Freisetzung von Schadstoffen vermieden wird. Zu diesem Zwecke können auch Trommelgehäuse und Mitnehmerträger in Gegenrichtung zueinander oder in gleicher Richtung mit gleicher oder unterschiedlicher Drehzahl drehen. Es ist selbverständlich, dass der Innenraum der Trommel mit einer Einfüllöffnung für das zu behandelnde Materialgemenge und einer Austrittsöffnung für das behandelte Material ausgestattet ist.

Das vorsortierte und in einem "Smasher" zerkleinerte, so aufbereitete Gemenge fließt in eine Magnetsortieranlage mittels der ferromagnetische Metalle aus dem Gemenge herausgelöst werden. Anschließend findet, nach vorherigem händischen oder maschinellem Aussondern von sperrigen, großvolumigen Bauteilen, eine weitere Zerkleinerung mit einem Zerkleinerungsgerät, wie einem Shredder, einer Hammermühle u. ä., statt. Beim nächsten Verfahrensschritt erfährt das so vorbereitete Gemenge eine Abtrennung von Kunststoffen von Materialien, die schwerer als Kunststoff sind in einem mit Wasser arbeitenden Flotationsprozess. Die Stoffe, die schwerer als Kunststoff sind setzen sich auf einem, als Rüttelboden ausgestalteten Siebboden ab, von dem sie über eine Austragsöffnung, deren Querschnitt steuerbar ist, in einen Auffangbehälter befördert werden. Dies ist auf die ruckartigen Bewegungen des Rüttelbodens zurückzuführen, wodurch kinetischen Energie in diesen Stoffen nur in einer Richtung wirkt und dadurch die Fortbewegung dieser Stoffe in Richtung Austragsöffnung initiiert.

Aus dem Material, das schwerer als Kunststoff ist, werden die NE-Metalle herausgelöst indem sie z. B. in eine Hochfrequenzanlage zum Trennen von NE-Metallen vom Restgemenge verbracht werden. Die ausgesonderten NE-Metalle werden einer Einrichtung zugeführt, die von einem, mit hoher Geschwindigkeit rotierenden Magnetfeld gebildet ist, das von einer Vielzahl, mindestens jedoch 50 auf einer Walze angeordneten Permanentmagneten oder einer entsprechenden Zahl von Elektromagneten, gebildet ist. Dieses Magnetfeld bewirkt, dass alle NE-Metalle von den noch verbleibenden Reststoffen getrennt und in einen Sammelbehälter befördert werden. Zu einer genauen Identifizierung und zur Trennung der NE-Metalle nach ihrer chemischen Zuordnung, z. B. Kupfer, Aluminium, Nickel, Chrom etc., dient ein nachgeschaltetes Gerät, das z. B. auf der Basis eines spektralanalytischen, oder auf die von Isotopen ausgehende radioaktive Strahlung abgestellten, oder das nach einem Induktions- (Hochfrequenz) oder einem Volumen/Gewichts orientierten Verfahren arbeitet.

Verbleibenden Reststoffe, wie z. B. Steine, Betonstücke, Holz etc., werden, nach deren Separierung von den NE-Metallen, abtransportiert: Soweit hierbei Flotationsflüssigkeit mit ausgeschieden wird, wird diese einer Reinigung und Wiederaufbereitung unverzogen und in die Flotationsbehälter zurückgeführt.

Der beim ersten Flotationsprozess abgetrennte Kunststoffanteil wird in ein zweites Flotationsbecken, das als Flotationsflüssigkeit ebenfalls reines Wasser enthält und in dem die Flotationsflüssigkeit mittels einer Pulsationseinrichtung in einer, genau auf das zu trennende Material abgestimmte Frequenz, in Bewegung gehalten wird, eingeleitet. In diesem zweiten Flotationsbecken werden alle Kunststoffe in Abhängigkeit ihrer Dichte voneinander getrennt.

Die ausgesonderten Kunststoffe können, wenn nötig, in weitere Flotationsstufen mit gesteuerter Pulsation feinst getrennt und sortiert werden, wobei die Dichte der Kunststoffe der Parameter für die Trennung ist. Eine exakte Abstimmung der Pulsationsfrequenz auf die zu trennenden Kunststoffe ist dabei unerlässlich. Diese Trennung von Kunststoffen kann somit nach Bedarf entsprechend häufig fortgesetzt werden, indem eine Vielzahl an Flotationsbecken hintereinander geschaltet wird.

Bei der Trennung vom Kunststoffen nach ihrer Dichte kann es hilfreich sein, zur Änderung der Dichte der Flotationsflüssigkeit und damit Anpassung an die Dichte und Hydrophobie der zu trennenden Kunststoffe, Chemikalien zuzusetzen. Bei diesen Chemikalien handelt es sich meist um Salze, wie CaCl₂

Am Ende dieser Flotation werden die so wiedergewonnenen Kunststoffe zur Feinsortierung in Einrichtungen weitergeleitet die eine Unterscheidung der Kunststoffarten, z. B. PVC, PE, PPC, ABS und andere ermöglichen. Solche Einrichtungen arbeiten meist auf der Basis von
a) Röntgenstrahlen, oder
b) einem Nahinfrarotsystem mit oder ohne Kamerakennung, oder
c) Laserbestrahlung, ebenfalls mit oder Kamerakennung zur Farbunterscheidung, oder
d) von Farbunterscheidung durch eine Kamerakennung.
Sie ermöglichen eine exakte Determination der einzelnen Kunststoffe.

Das erfindungsgemäße Verfahren umfasst damit alle Schritte, die Stoffgemenge durchlaufen sollten, um auf ihrem Weg von der Beseitigung bis hin zur stoffimmanenten Wiederaufbereitung von E-Schrott. Die in einem solchen Gemenge aus E-Schrott enthaltenen wiederverwertbaren Einzelstoffkomponenten und deren Weiterleitung zum artspezifischen Wiedereinsatz im Produktionskreislauf ist damit ohne spezielle Belastung der Umwelt mit Schadstoffen gewährleistet.

In einer Skizze wird dieser Weg vom E-Schrott zum wiedereinsetzbaren Werkstoffprodukt in der erfindungsgemäßen Verfahrenskette dargestellt.

### Beschreibung der Skizze des Verfahrensablaufs

E-Schrott (E) wird über eine z. B. Bandfördereinrichtung (B) in einen geschlossenen Raum (R) verbracht, in dem eine händische oder maschinelle Vorsortierung (V) und Aussonderung stattfindet, z. B. von Kabelsträngen, Quecksilberschaltern u. a. schadstoffbelasteten oder zur Verknäuelung neigenden Bauelemente ausgesondert werden. Nach dieser Vorsortierung (V) gelangt der E-Schrott zur Zerkleinerung in einen sog. "Smasher" (S). Ein "Smasher" ist eine zylindrische Trommel (wie oben beschrieben) großen Durchmessers, der das eingefüllte Gut zu seiner höchsten Position transportiert und dann herabfallen lässt, sodass mitgeführte, zerbrechliche Bauteile durch den Aufprall auf den unteren Bereich der zylindrischen Trommel zerbersten. Kondensatoren u. ä. gehen dabei jedoch nicht zu Bruch, da der Aufprall steuerbar ist. Hierdurch ist die Freisetzung von Schadstoffen aus diesen Bauteilen vermieden, anders als bei der Bearbeitung solcher Bauteile in einer schneidenden Zerkleinerungsanlage, wie Shredderanlage (SH) oder einer Hammermühle und ähnlichen, die derartige Bauteile aufschneiden oder aufreißen. Im "Smasher" (S) behandeltes Material wird wiederum in einem geschlossenen Raum (R) nachsortiert. Kondensatoren u. ä. mit Schadstoffen belastete Bauteile werden aus dem übrigen E-Schrott von Hand oder maschinell ausgesondert. Anschließend werden in einer Magnetsichtanlage (M-S) (Elektromagnete) ferro-magnetische Bestandteile (FE) ausgesondert. Das verbleibende, von Schadstoffen und Eisen befreite Material wird, nachdem in einer Zwischenstufe auch sperrige und großvolumige Bauteile, die nur schwer zerschneidbar sind, maschinell oder händisch aussortiert wurden, in einer weiteren Zerkleinerungsanlage, wie Shredderanlage oder Hammermühle u. ä. Geräten, durch zerschneiden fein zerkleinert. Das so erhaltene Gemenge wird in eine erste Flotationsanlage (K-S) mit einer gesteuerten Pulsationseinrichtung (P), in der die Flotationsflüssigkeit meist reines Wasser ist, eingeführt. Hier erfolgt eine Trennung von Bestandteilen im Gemenge, die schwerer als Kunststoff sind und Kunststoffen. Die schwereren Bestandteile (GS) lagern sich im Flotationsbecken (K-S) auf einem ruckartig hin- und herbewegten Siebboden (SB) ab, der sich in einer Richtung langsam und in der anderen Richtung beschleunigt bewegt und dann ruckartig angehalten wird, sodass die in dem abgelagerten schweren Material enthaltene kinetische Energie dieses zu einer Öffnung im Siebboden (SB) zu einer Austragschleuse hin bewegt, durch die das so bewegte schwere Material in einen Auffangbehälter (AB) fallen kann, aus dem es zur Weiterbehandlung in nachfolgende Apparate eingeführt wird.

Nach der Trennung von Kunststoffen und solchen Materialien, die schwerer als Kunststoffe sind, trennen sich die Verfahrensschritte zunächst in zwei separate Zweige. Der eine Zweig befasst sich mit der weiteren Aufbereitung der Kunststoffe und der andere Zweig mit der Weiterbehandlung der Stoffe, die schwerer als Kunststoffe sind.

Der Zweig, der sich mit der Weiterbehandlung der Kunststoffe befasst, enthält zur Trennung von Kunststoffen nach deren Dichte (S-DK) mindestens eine weitere Flotationstrennstufe (K-D), in der mittels einer genau gesteuerten Pulsation, abhängig von der Dichte der zu trennenden Kunststoffe, die Flotationsflüssigkeit in eine vibrierende Bewegung versetzt wird, sodass leichtere (G-LK) von schwereren Kunststoffen (G-SK) getrennt werden. Derartige Flotationstrennungen können nach Bedarf in jeder gewünschten Häufigkeit, nur bestimmt durch den gewünschen Feinheits- und Reinheitsgrad der angestrebten Trennung, hintereinander wiederholt werden. Hierbei kann es hilfreich sein, bei der Trennung der Kunststoffe nach ihrer Dichte, der Flotationsflüssigkeit Chemikalien, meist Salze wie CaCl₂, zuzusetzen. Damit kann die Dichte der Flotationsflüssigkeit so an die Dichte der zu trennenden Kunststoffe noch besser angepasst werden, womit eine raschere Arbeitsweise ermöglicht wird. Im Anschluss an diese Trennung der Kunststoffe nach Dichte kann sich eine Trennstrecke (S-CH) anschließen, die eine Trennung der Kunststoffe nach deren chemischer Zuordnung, z. B. PVC, PE, PPC, ABS u. andere, definiert. Eine solche Trennstrecke kann gebildet sein von
a) einer auf der Basis von Röntgenstrahlen arbeitenden Einrichtung, oder
b) einer Bestrahlung mit Laserlicht, mit oder ohne zusätzliche Farbkennung mittel einer Kamera, oder
c) einem Nahinfrarotsystem, mittels oder ohne zusätzliche Kamera zur Farbkennung, oder
d) einer reinen Farbkennung mittels einer Kamera
e) selbverständlich können diese einzelnen Systeme auch miteinander gekoppelt werden.

Der zweite Zweig, der sich mit den Materialien (GS) befasst und deren weitere Sortierung vornimmt, die sich in der ersten Flotationsstufe (K-S) auf einem Siebboden (SB) abgesetzt haben, da sie schwerer als Kunststoffe sind, beinhaltet Verfahrensschritte, die zu einer Trennung von Nichteisenmetallen (NE) von reinen Ballast- oder Reststoffen (RS) führen. Nach der Trennung der Reststoffe (RS), die auf Halde verbracht oder thermisch weiterverwertet werden, werden die abgeschiedenen Nichteisenmetalle (NE) einer weiteren Sortierungsstufe nach ihrer chemischen Zuordnung, z. B. Cu, Ni, Cr, Al, Ag, Au etc. unterworfen. Eine solche Sortierungsstufe kann z. B. auf einem induktivem, der Isotopenstrahlung ausgerichteten, einem Gewicht//Volumen vergleichenden oder einem spektralanalytischen Verfahren beruhen.

Nach Durchlaufen sämtlicher, aneinander anschließender Verfahrensschritte können die mit diesem Verfahren aus E-Schrott (E) wiedergewonnenen Werkstoffe einer artgerechten, sinnvollen Weiterverwendung zugeführt werden. Damit werden nicht nur natürliche Ressourcen geschont, sondern wird auch eine umweltgerechte Entsorgung von E-Schrott (M) sichergestellt, bei der eine Schadstoffbelastung der Umwelt vermieden ist.

Im Hinblick auf Ökonomie und Ökologie wird alle Flotationsflüssigkeit, die beim Austragen der einzelnen Stoffkomponenten mit ausgetragen wird, einer Reinigungsprozedur unterworfen und dann wieder in die einzelnen Prozessstufen zurückgeführt.

### Bezugszeichen

- **SH**: Shredder
- **M bzw. E**: E-Schrott
- **M-S**: Magnetsichtung, zum Aussondern von Eisen aus dem E-Schrott
- **FE**: Eisen
- **K-S**: Kunststoffsichtung zur Trennung von Kunststoffen von Material schwerer als Kunststoffe
- **GS**: Stoffgemenge schwerer als Kunststoffe
- **NE**: Nichteisenmetalle
- **RS**: Rest- oder Ballaststoffe
- **S-DK**: Sortierung von Kunststoffen nach Dichte
- **S-CH**: Feinsortierung von Kunststoffen nach deren chemischer Zusammensetzung, z. B. PVC, PE, PPC, ABS u. anderen
- **G-LK**: Gemenge von leichten Kunststoffen
- **G-SK**: Gemenge aus schweren Kunststoffen
- **E bzw. M**: Elektroschrott (E-Schrott)
- **B**: Bandfördereinrichtung
- **R**: geschlossener Raum
- **V**: Vorsortierung
- **S**: "Smasher" (rotierende, zylindrische Trommel großen Durchmessers, die Materialien an die höchste Stelle der Trommel befördert und dann auf die Stelle fallen lässt, sodass sie dort zertrümmern)
- **P**: Pulsationseinrichtung mit Frequenzsteuerung
- **AB**: Auffangbehälter
- **K-D**: Flotationstrennstufe
- **SB**: Siebboden
- **TR**: Aussondern von sperrigen Bauteilen

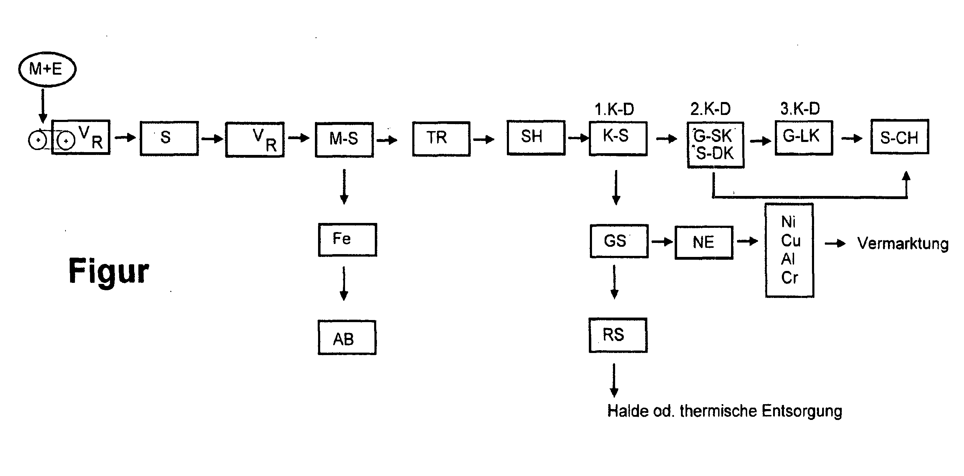

## Patentansprüche

1. Recyclingverfahren für Elektronikschrott zur Gewinnung von wiederverwertbaren Werkstoffen bei Vermeidung einer Freisetzung von Schadstoffen, das mehrere Einzelstufen umfasst, ***gekennzeichnet durch** systemgerechtes Aneinanderreihen folgender Verfahrensstufen:*
• Erster Sortiervorgang: Aussondern von offensichtlich schadstoffhaltigen Bauteilen, z. B. Quecksilberschalter und E-Kabeln in einem geschlossenen Raum,
• Zerkleinern des verbleibenden Stoffgemenges mit einem sog. "Smasher",
• Zweiter Sortiervorgang in einem geschlossenen Raum zum Trennen von schadstoffbelastendem Material von unbelastetem Material, z. B. Kondensatoren, LCD-Displayschirmen etc. ,
• Aussondern von ferromagnetischem Material mittels Magnetsichtung (z. B. Elektromagneten)
• Dritter Sortiervorgang: Aussondern von sperrigen, großvolumigen Bauteilen
• Zweite Zerkleinerungsstufe des schadstoffbefreiten Materialiengemenges in einem Schneidzerkleinerer, z. B."Shredder", Hammermühle, Ein- oder Mehrwellenzerkleinerern,
• Flotationsverfahren in einem Wasserbad mit regelbarer Vibration **durch** einen, auf das zu trennende Material abstimmbaren Pulsator, zur Trennung von Kunststoffen von Materialien, die schwerer als Kunststoffe sind,
• Weitere Flotationsverfahren mit regelbarer Vibration der Bäder der Trennflüssigkeit zum Feintrennen von Kunststoffen nach ihrer unterschiedlichen Dichte,
• Identifikation und Determination der gewonnenen reinen Kunststoffe, anschließend deren sortengerechte Verpackung und Kennzeichnung,
• Weiteraufbereitung des Materials, das schwerer als Kunststoffe ist in einer Trenneinrichtung zum Aussondern von NE-Metallen von Reststoffen, wie Steinen u. dergl., mittels eines induktiv oder auf Magnetbasis arbeitenden Verfahrens,
• Trennen der NE-Metalle in einer Sichtanlage nach Werkstoffarten, Al, Ni, Cr, Ag, Au etc. ,
• Verbringen der Reststoffe auf eine Halde bzw. Zuführen zu einer thermischen Endverwertung.

2. Verfahren nach Patentanspruch 1, ***dadurch gekennzeichnet, dass*** ein Smasher verwendet ist, der von einer feststehenden Trommel gebildet ist, in deren Innenraum ein mit regelbarer Drehzahl und Drehrichtung ausgestatteter Mitnehmerträger vorgesehen ist, dessen Mitnehmern entlang der Innenwandung der Trommel gleiten, der konzentrisch zur Trommel gelagert ist und der in offener Verbindung zur Innenwandung der Trommel steht.

3. Verfahren nach Patentanspruch 1, ***dadurch gekennzeichnet, dass*** die Identifikation und Separierung der Kunststoffe nach deren chemischen Zusammensetzung durch Bestrahlung der Kunststoffe mit Röntgenstrahlen erkennbar gemacht und abhängig von Röntgenspektrum erfolgt.

4. Verfahren nach Patentanspruch 1, ***dadurch gekennzeichnet, dass*** die Identifikation und Trennung der Kunststoffe nach deren chemischer Zusammensetzung durch Bestrahlung der Kunststoffe mit Laserstrahlen und zusätzlicher Farbkennung mit oder ohne Kamera erfolgt.

5. Verfahren nach Patentanspruch 1, ***dadurch gekennzeichnet, dass*** die Identifikation und Trennung der Kunststoffe nach deren chemischer Zusammensetzung durch Infrarotlichtbestrahlung der Kunststoffe und zusätzlich zur Farbkennung mit oder Kamera erfolgt.

6. Verfahren nach Patentanspruch 1, ***dadurch gekennzeichnet, dass*** dieIdentifikation und Trennung der Kunststoffe nach deren chemischer Zusammensetzung mittels Farbkennung durch eine Kamera erfolgt.

7. Verfahren nach Patentanspruch 1, ***dadurch gekennzeichnet, dass*** die Identifikation und Trennung der Kunststoffe nach deren chemischer Zusammensetzung mittels einer Kombination der Verfahrensschritte der Patentansprüche 3 bis 6 erfolgt.

8. Verfahren nach Patentanspruch 1, ***dadurch gekennzeichnet, dass*** die Unterscheidung der Nichteisenmetalle auf Grund der unterschiedlichen Isotopenwerte und der daraus resultierenden unterschiedlichen radioaktiven Strahlung erfolgt und die Trennung der Nichteisenmetalle durchgeführt wird.

9. Verfahren nach Patentanspruch 1, ***dadurch gekennzeichnet, dass*** das die Trennung der Nichteisenmetalle auf Grund ihrer unterschiedlichen spezifischen Gewichte mittels der Feststellung ihrer unterschiedlichen Volumina bezogen auf das jeweilige. Gewicht der einzelnen Stücke erfolgt.

10. Verfahren nach Patentanspruch 1, ***dadurch gekennzeichnet, dass*** die unterschiedlichen Nichteisenmetalle auf Grund unterschiedlicher Induktionsfähigkeit festgestellt und getrennt werden.

11. Verfahren nach Patentanspruch 1, ***dadurch gekennzeichnet, dass*** die unterschiedlichen Nichteisenmetalle mittels eines spektralanalytischen Verfahrens identifiziert und anschließend getrennt werden.

12. Verfahren nach Patentanspruch.1, ***dadurch gekennzeichnet, dass*** der Flotationsflüssigkeit zur Trennung von Kunststoffen nach ihrer unterschiedlichen Dichte, Chemikalien, wie Salze CaCl₂, zugesetzt werden.

## Claims

1. Recycling process for electronic waste comprising several steps in order to regain reusable raw material and avoiding escape of noxious stuff, **characterized in** adding the following procedural steps:
• A first sorting step: separation of all evidently noxious material containing construction components, e.g. mercury switches and electronic wires, in a closed room,
• Comminuting of a mixture of remaining materials by a smasher,
• Second sorting step in a closed room for separation of noxious stuff containing material from not contaminated material, e.g. condensers, LCD-display monitors etc.,
• Separation of ferro-magnetic material by using a magnetic system (e.g. electro magnets)
• Third sorting step: Separation of bulky material and such of big volume,
• Second comminuting step of material already released from noxious material by using cutting equipment e.g. shredder, hammer-mill, one or more shaft comminuting machines,
• Flotation process by using a water bath having a controllable vibration equipped with a adjustable pulsator for separating plastics from material heavier than plastics,
• Further flotation processes being equipped with controllable vibration of the bath of separation liquid for separating plastics of different density,
• Identification and determination of such plastics regained followed by a packaging and marking step in correspondence to individual identity,
• Follow-up treatment of the material heavier than plastics by a separation equipment to sort out non-iron stuff from residues as stones and similar objects by a procedure based on inductive or magnetic measures,
• Separation of non-iron material by a sorting equipment that differentiates Al, Ni, Cr, Ag, Au etc. from each other,
• Taking residues to a slagheap or a thermal disposal site.

2. Process according to claim 1, ***characterized in,* that** a smasher is used comprising a fixed drum in the interior of which a cam is placed the revolution and direction of movement of it may be controlled and which glides along the interior wall of that drum and that is pivoted concentrically to the drum and which is in open connection towards the inner wall of the drum.

3. Process according to claim 1, ***characterized, in* that** identification and separation of plastics in accordance with their chemical composition is made visible by using X-raying dependent from x-ray spectrum.

4. Process according to claim 1, ***characterized in**,* identification and separation of plastics in conformity with their chemical composition by laser-raying of the plastic material and in addition by using a camera for colour identification.

5. Process according to claim 1, ***characterized in**,* identification and separation of plastics in conformity with their chemical composition by infra-red raying and in addition by using a camera for colour identification.

6. Process according to claim 1, ***characterized in,* that** identification and separation of plastics in conformity with their chemical composition by colour identification by using a camera.

7. Process according to claim 1, ***characterized in,* that** identification and separation of plastics in conformity with their chemical composition by combining procedural steps of claims 3 through 6.

8. Process according to claim 1, ***characterized in,* that** for determining of non-iron metals by using the difference of isotopes based on their different radioactive radiation and separation of non-iron materials.

9. Process according to claim 1, ***characterized in,* that** separation of non-iron materials is carried out on the basis of the difference in their specific weight in combination with the individual volume.

10. Process in accordance with claim 1, ***characterized in,* that** non-iron metals are identified and separated by using the difference in their individual inductivity.

11. Process in accordance with claim 1, ***characterized in,* that** non-iron materials are identified and separated by application of a spectral-analytical procedure.

12. Process according to claim 1, ***characterized in,* that** for separation of plastics in compliance with their varying density flotation liquid is mixed with chemical substances as, salt CaCl₂.

## Revendications

1. Procédé de recyclage de déchets électroniques pour récupérer des matériaux valorisables en évitant une libération de substances nocives, lequel procédé comprend plusieurs étapes individuelles et est **caractérisé par** la succession systématique des étapes de procédé suivantes :
• première opération de tri: élimination, dans un local fermé, des éléments contenant manifestement des substances nocives, par exemple des interrupteurs à mercure et des câbles électriques,
• broyage du mélange de matières restant au moyen de ce que l'on rappelle un « smasher »,
• deuxième opération de tri dans un local fermé pour séparer les matériaux contaminés des matériaux non contaminés, par exemple condensateurs, écrans LCD, etc.,
• élimination des matériaux ferromagnétiques par tri magnétique (par exemple au moyen d'électroaimants),
• troisième opération de tri : élimination des éléments encombrants de grand volume,
• deuxième étape de broyage du mélange de matériaux débarrassé des substances nocives dans un broyeur déchiqueteur, par exemple « shredder », broyeur à marteaux, broyeur mono- ou multiaxes,
• procédé de flottaison dans un bain d'eau soumis à une vibration réglable par un pulsateur pouvant être accordé au matériau à séparer, pour séparer les matières plastiques des matériaux plus lourds que les matières plastiques,
• procédé de flottaison supplémentaire avec vibration réglable des bains du liquide de séparation pour la séparation fine des matières plastiques en fonction de leurs différences de densité,
• identification et détermination des matières plastiques pures obtenues, suivi de leur emballage et repérage par type,
• poursuite du traitement des matériaux plus lourds que les matières plastiques dans un dispositif de séparation pour séparer les métaux non ferreux des matières résiduelles, telles que pierres et analogues, au moyen d'un procédé fonctionnant par induction ou selon un principe magnétique,
• séparation des métaux non ferreux dans une installation de tri par types de matériau, Al, Ni, Cr, Ag, Au, etc.,
• transfert des matières résiduelles vers un terril ou amenée de celles-ci à un traitement thermique final.

2. Procédé selon la revendication 1, **caractérisé en ce que** l'on utilise un smasher qui est formé d'un tambour fixe à l'intérieur duquel est prévu un support de taquets d'entraînement à vitesse de rotation et sens de rotation réglables, dont les taquets d'entraînement glissent le long de la paroi intérieure du tambour, qui est monté concentriquement au tambour et qui est en liaison ouverte avec la paroi intérieure du tambour.

3. Procédé selon la revendication 1, **caractérisé en ce que** l'identification et la séparation des matières plastiques selon leur composition chimique sont rendues visibles par exposition des matières plastiques à des rayons X et sont réalisées en fonction de leur spectre de rayons X.

4. Procédé selon la revendication 1, **caractérisé en ce que** l'identification et la séparation des matières plastiques selon leur composition chimique sont réalisées par exposition des matières plastiques à des rayons laser et par détection chromatique supplémentaire avec ou sans caméra.

5. Procédé selon la revendication 1, **caractérisé en ce que** l'identification et la séparation des matières plastiques selon leur composition chimique sont réalisées par exposition des matières plastiques à une lumière infrarouge et par détection chromatique supplémentaire avec ou sans caméra.

6. Procédé selon la revendication 1, **caractérisé en ce que** l'identification et la séparation des matières plastiques selon leur composition chimique sont réalisées par détection chromatique au moyen d'une caméra.

7. Procédé selon la revendication 1, **caractérisé en ce que** l'identification et la séparation des matières plastiques selon leur composition chimique sont réalisées au moyen d'une combinaison des étapes de procédé des revendications 3 à 6.

8. Procédé selon la revendication 1, **caractérisé en ce que** la différenciation des métaux non ferreux est réalisée sur la base des différentes valeurs isotopiques et du rayonnement radioactif différent qui en résulte et **en ce que** la séparation des métaux non ferreux est effectuée.

9. Procédé selon la revendication 1, **caractérisé en ce que** la séparation des métaux non ferreux est réalisée sur la base de leurs poids volumiques différents en déterminant leurs volumes différents rapportés au poids respectif des différents morceaux.

10. Procédé selon la revendication 1, **caractérisé en ce que** les différents métaux non ferreux sont décelés et séparés sur la base de leur inductance différente.

11. Procédé selon la revendication 1, **caractérisé en ce que** les différents métaux non ferreux sont identifiés et ensuite séparés au moyen d'un procédé d'analyse spectrale.

12. Procédé selon la revendication 1, **caractérisé en ce que** des substances chimiques, comme des sels CaCl₂, sont ajoutées au liquide de flottaison pour la séparation des matières plastiques selon leur densité différente.
